# EUROPEAN PATENT SPECIFICATION

(11) **EP 3 505 424 B1**
(45) Date of publication and mention of the grant of the patent: **22.07.2020**
(21) Application number: 18213384.3
(22) Date of filing: 18.12.2018
(51) Int. Cl.: B62D 21/18, B60R 19/42, B60R 19/30, B60R 19/38

(54) **KART**
GOKART
KART

(30) Priority: 29.12.2017 AT 510912017
(43) Date of publication of application: 03.07.2019
(73) Proprietor: BRP-Rotax GmbH & Co. KG, 4623 Gunskirchen (AT)
(72) Inventor: Kritzinger, Thomas, 4873 Frankenburg am Hausruck (AT)
(74) Representative: Hübscher & Partner Patentanwälte GmbH

(56) References cited:
- EP-A1- 2 204 303
- DE-U1- 29 700 456
- US-A- 5 806 901

## Description

The invention relates to a kart having a frame, a front and a rear axle and an impact protection surrounding the frame, and having at least one front and one rear protective element and at least one lateral protective element on each frame side of the kart, wherein shock-absorbing rubber-elastic dampers are provided between the frame and the protective elements, wherein the pivot bearings are provided near the rear axle and each comprise a bearing block fixed to the frame and a bearing pedestal pivotally adjustable relative to said bearing block, wherein the lateral protective elements each engage on the associated bearing pedestal.

Such protective elements, i.e. bumpers that fully or partially enclose the front, rear and side of the frame, are used in karts to dampen impact loads on the frame and the driver in the event of a collision and thus protect both the driver and the vehicle from damage caused by impact forces.

For this purpose, vehicles, in particular karts, are usually equipped with bumpers connected to their chassis. In the event of an impact, bumpers and/or shock-absorbing rubber-elastic dampers are deformed elastically or plastically, whereby the kinetic energy of the impact is at least partially absorbed. Such devices are known for example from the US 5 806 901 A and the WO 03/057538 A1.

US 5 806 901 A discloses a kart according to the preamble of claim 1 with lateral bumper sections that are pivotally mounted to a frame at pivots. The pivot bearings are close to the front axle wherein the bumper is pivotally mounted to the frame itself without a bearing pedestal. Similar is known from the EP 2 204 303 A1.

The use of bumpers is particularly necessary for karts under rental, as the vehicles in the rental area are usually not treated gently and are therefore considerably overstressed.

To ensure that neither the frame or body parts nor, in particular, the driver of a kart are unduly affected in the course of such treatment, karts are usually equipped not only with front and rear bumpers attached to the frame, but also on the long sides. It is intended to thus avoid repairs or the replacement of damaged kart components.

It is necessary that the impact protection returns elastically to its non-deformed ready position after an impact deforming a protective element. The protective elements must be held securely on the frame and should safely dissipate impulse peaks acting on the kart. For this purpose, shock-absorbing, rubber-elastic dampers can be provided between the protective element and the frame, consisting for example of deformable rubber elements (EP 2 204 303 A). Although this solution is inexpensive, it has the disadvantage that the dampers used are relatively expensive, as they all transfer normal and transverse forces to the frame. Because such dampers are subject to aging over time and thus partially lose their mechanical properties, they must be replaced at regular intervals in order to achieve the desired damping effect.

It is also known that karts are fitted with shock absorbers located between the frame and the protective element (EP 2 246 221 A). These shock absorbers only transmit forces in the direction of the longitudinal axis of the vehicle and can therefore only absorb impact forces resulting from a frontal impact, which is also a disadvantage of such solutions. Transverse components of the impact forces can even damage such shock absorbers.

The invention is therefore based on the object of creating a kart of the initially described type whose side impact protection can absorb normal and transverse forces well and is nevertheless held securely on the frame and guided in a defined manner in relation to the frame.

The invention solves the object set by providing a kart with the features of claim 1. This ensures that the side impact protection transmits impact-related normal and transverse forces into the frame in a well-damped manner, while the pivot bearing ensures that they are always held securely on the frame and guided in a defined manner relative to the frame. In the event of a force acting on a lateral protective element, the protective element is displaced around the pivot bearing axis, a frame vertical axis, against the spring force of rubber-elastic dampers against the frame. The protective element is designed in particular in the form of a single-arm lever which can be pivoted freely or damped via the pivot bearing on the frame. Since the pivot bearing is provided near the rear axle, practically in the wheel arch, it is also protected against direct impact loading.

In order to ensure that the pivot bearing actually only performs pivoting movements and is protected against excessive impact loading, the lateral protective elements in the central area between the front and rear axle may be bent outwards in the direction of a frame transverse axis, curved outwards or the like, and drawn in close to the frame longitudinal axis from the front and rear axles. In most practical cases, any impact load first acts on the lateral protective element in the area of the greatest distance between the arch and the longitudinal axis of the frame and not in the vicinity of the pivot bearing.

In order to be able to absorb the impact forces in this area in an advantageous way, it is recommended that buffers acting as rubber-elastic dampers are provided between the frame and the lateral protective elements in the central area between the front and rear axle. The number and damping performance of the rubber-elastic dampers used in each case must be adapted to the design of the person skilled in the art and the respective purpose of use of the kart.

In this case, the shock-absorbing, rubber-elastic dampers can be buffers in particular, which are attached to one side of the frame and transmit only normal forces and practically no transverse forces, since they are preferably not connected to the assigned protective element or rubber-elastic bearings transmitting normal and transverse forces, which are connected on the one hand to the frame and on the other hand to the assigned protective element.

The lateral protective elements each attack the front and rear protective elements directly or indirectly via connecting protective elements, wherein the lateral protective element is connected to the assigned rear connecting protective element via the bearing pedestal. This ensures that the wheels and wheel axes are also protected against accidental excessive impact loads.

The individual protective elements and, optionally, the connecting protective elements are preferably bolted together to improve the maintainability of the kart. Since the protective elements can also be permanently deformed due to impact, or are intentionally to be screwed together under a certain preload, it is advantageous if these screw connections allow a certain amount of play when the screws and nuts are fitted, which is why each screw connection comprises a nut which is radially secured and held rotationally fixed in a recess of an associated first protective element and a washer which is radially secured in a recess of a second protective element to be connected to the first, with a conical seat for a conical seat screw which engages in the nut. The conical seat ensures proper mutual alignment of the protective elements to be screwed together.

Between the frame and the front protective element, preferably also at least one shock-absorbing buffer acting as a rubber-elastic damper is provided. A major advantage of these buffers is that they are relatively inexpensive and can be changed quickly.

Between the frame and the front protective element or the connecting protective element, however, at least one rubber-elastic bearing can also be provided. Rubber-elastic bearings can also transmit transverse forces and thus ensure that the impact protection is properly held in position even at a greater distance from the pivot bearing fixed to the frame.

It is also advantageous if at least one shock-absorbing buffer acting as a rubber-elastic damper is provided between the frame and the rear protective element.

Since the engine requiring special protection is located in the rear area, it is recommended that the rear protective element be mounted in the longitudinal guides assigned to the frame and that the buffers be guided against the spring force in the direction of the frame longitudinal axis so that they can be displaced relative to the frame. An undefined evasion of the rear protective element in the event of an impact load can thus be avoided.

The said nipple-shaped buffers to be used have in particular a mounting body from which the buffer body projects freely, which on its side opposite the mounting body forms a stop for a protective element, wherein the buffer body consists of elastic material, in particular rubber or rubber-elastic foam.

The subject matter of the invention is shown by way of example in the drawings, wherein:

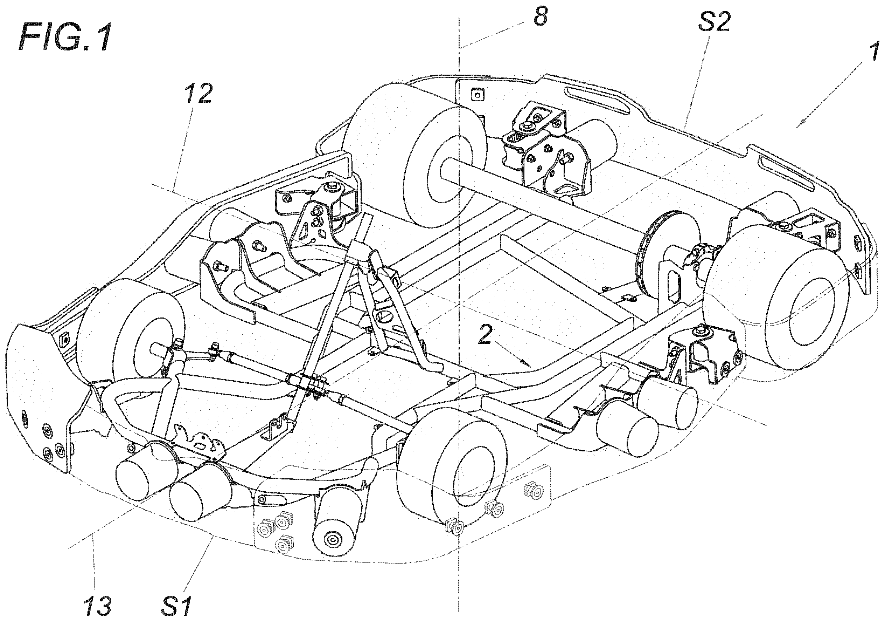

- Fig. 1: shows a kart according to the invention in oblique view,
- Fig. 2: shows the top view of the kart,

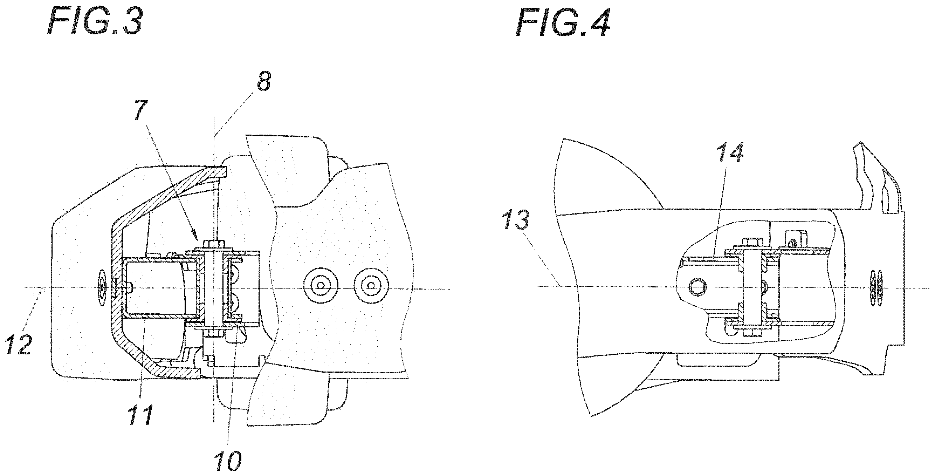

- Fig. 3: shows an enlarged section of the kart from Fig. 2 in section according to line III-III,
- Fig. 4: shows an enlarged section of the kart from Fig. 2 in section according to line IV-IV,

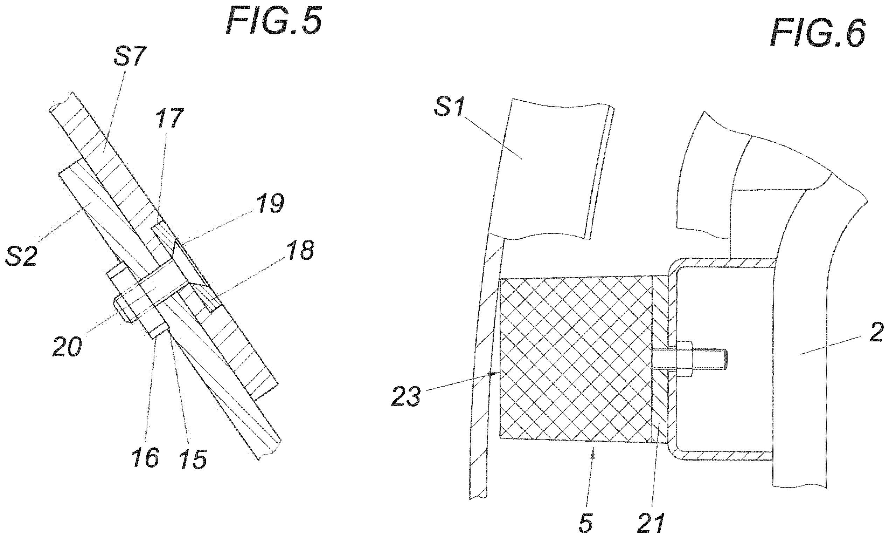

- Fig. 5: shows an enlarged screw connection of two protective elements in cross-section, and
- Fig. 6: shows a buffer in cross-section.

A kart 1 according to the invention comprises a frame 2, a front and a rear axle 3, 4 and an impact protection surrounding the frame 2. Frame 2 is a tubular steel frame which supports the other vehicle components. For reasons of clarity, vehicle parts that are not relevant to the invention, such as the engine, tank, batteries, seat, fairings, etc., are not shown in the drawing. The impact protection has at least one front and one rear and at least one lateral protective element S1, S2, S3, S4 on each side of the kart frame. These protective elements S1, S2, S3, S4 are connected by means of connecting protective elements S5, S6, S7, S8. Between the frame 2 and the protective elements S1, S2, S3, S4, S5, S6, shock-absorbing rubber-elastic dampers are provided. In the present case, the shock-absorbing rubber-elastic dampers are, in particular, buffers 5, which transmit only normal forces and practically no transverse forces, and the rubber-elastic bearings 6, which transmit normal and transverse forces.

To ensure that the side impact protection can absorb and dampen longitudinal and transverse forces well and still be held securely on the frame and guided in a defined manner in relation to the frame, the lateral protective elements S3, S4 are each mounted on a pivot bearing 7 fixed to the frame so that they can be pivoted about a frame vertical axis 8. The pivot bearings 7 of the two frame sides are provided near the rear axle between a lateral frame attachment 9 and the rear axle 4 and are attached to the frame attachment 9. The pivot bearings 7 each comprise a bearing block 10 fixed to the frame and a bearing pedestal 11 pivotally adjustable in relation to this bearing pedestal, wherein the lateral protective elements S3, S4 and in the embodiment example also the connecting protective elements S7, S8 each engage on the assigned bearing pedestal 11. The pivot bearing is positioned in the end area of the lateral protective element (S3, S4) as shown in the drawing. S3/S4 could also be shorter than shown in the drawing.

The lateral protective elements S3, S4 are bent outwards in the central area between front and rear axle 3, 4 in the direction of a frame transverse axis 12, i.e. convex, and in the near area between front and rear axle 3, 4 they are pulled in towards the frame longitudinal axis 13. This ensures that the pivot bearing 7 cannot be hit directly in the event of a side impact and that the impact forces can be absorbed by buffers 5 acting as rubber-elastic dampers between the frame 2 and the lateral protective elements in the central area between the front and rear axle. The buffers 5 engage with the protective elements S3, S4 in the central area between the front and rear axle or where the protective elements S3, S4 protrude the farthest to the outside. The pivot bearing 7 is arranged in front of the rear tire and does not protrude beyond it towards the outside. The lateral protective elements S3, S4 each indirectly engage the front and rear protective elements S1, S2 via the connecting protective elements S5, S6, S7, S8, wherein the lateral protective element S3, S4 is connected to the assigned connecting protective element S7, S8 via the bearing pedestal 11.

Between the frame 2 and the front protective element S1 two shock-absorbing buffers 5 acting as rubber-elastic dampers are provided and one rubber-elastic bearing each is provided between the frame 2 and the front connecting protective elements S5, S6.

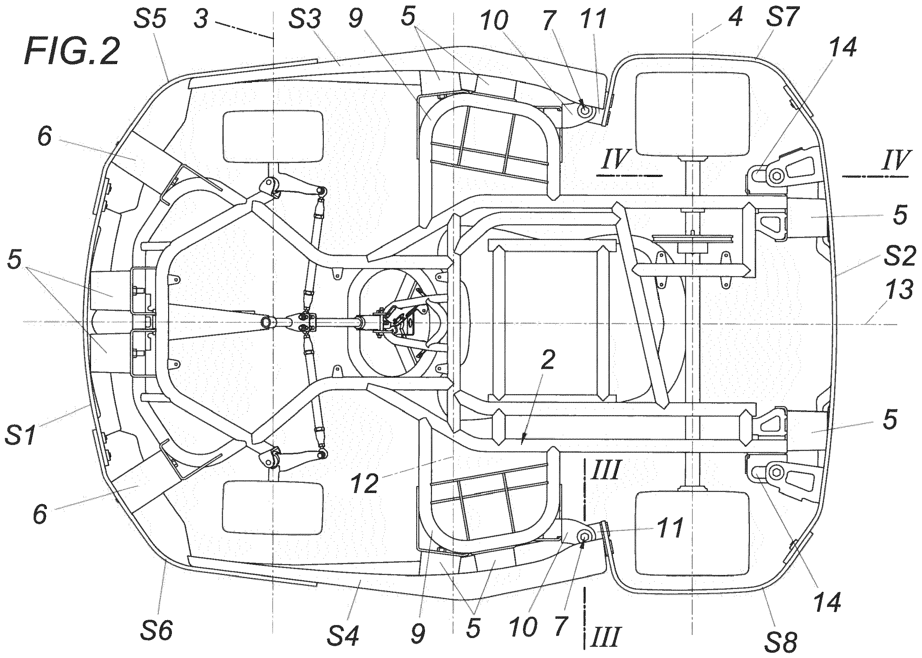

Two shock-absorbing buffers 5 acting as rubber-elastic dampers are also provided between frame 2 and the rear protective element S2. In addition, the rear protective element S2 is mounted in the longitudinal guides 14 assigned to the frame and guided against the spring force of the buffers 5 in the direction of the frame longitudinal axis13 in a displaceable manner relative to the frame 2. The guides can also permit a defined transverse guidance of the protective element S2, for which purpose the connecting bow between protective element S2 and longitudinal guide 14 can form a transverse guide, which is covered in the drawing (Fig. 2) by a washer of the screw connection of connecting bracket and longitudinal guide 14. The bearing thus enables a displacement of approx. 50 mm in the longitudinal direction and approx. 7 mm in the transverse direction.

Mutually adjoining protective elements S1 to S4 and connecting protective elements S5 to S8 are screwed together. These screw connections each comprise a nut 16 radially secured in a recess 15 of an associated first protective element and a washer 18 radially secured in a recess 17 of a second protective element to be connected to the first, with a conical seat 19 for a conical seat screw 20 engaging in the nut 16. The protective elements can thus be screwed together more easily, as the screw connection can initially be easily set in place even if the protective elements do not fit exactly one above the other and, subsequently, when the screw connection is tightened, automatic alignment takes place as a result of the design features. The buffers 5 have a mounting body 21, from which the buffer body 22 freely projects, which on its side opposite the mounting body forms a stop 23 for a protective element, wherein the buffer body 22 consists of elastic material, in particular rubber or rubber-elastic foam.

## Claims

1. Kart (1) having a frame (2), a front axle (3) and a rear axle (4), and having an impact protection which surrounds the frame (2) and has at least one front and one rear protective element and at least one lateral protective element (S1, S2, S3, S4) on each frame side of the kart (1), wherein shock-absorbing, rubber-elastic dampers are provided between the frame (2) and the protective elements (S1, S2, S3, S4), wherein the lateral protective elements (S3, S4) are each mounted on a pivot bearing (7) fixed to the frame so as to be pivotally adjustable about a frame vertical axis (8), **characterized in that** the pivot bearings (7) are provided nearer the rear axle (4) than the front axle (3) and each comprise a bearing block (10) fixed to the frame and a bearing pedestal (11) pivotally adjustable relative to said bearing block (10), wherein the lateral protective elements (S3, S4) each engage on the associated bearing pedestal (11), wherein the lateral protective elements (S3, S4) each engage directly or indirectly via a front connecting protective element (S5, S6) on the front protective element (S1) and directly or indirectly via a rear connecting element (S7, S8) on the rear protective element (S2) and if applicable, wherein the lateral protective element (S3, S4) is each connected to the associated rear connecting protective element (S7, S8) via the bearing pedestal (11).

2. Kart according to claim 1, **characterized in that** the lateral protective elements (S3, S4) are bent outwards in the central region between the front and rear axles (3, 4) in the direction of a frame transverse axis (12) and are drawn in towards the frame longitudinal axis (13) in the near region of the front and rear axles (3, 4).

3. Kart according to claim 1 or 2, **characterized in that** buffers (5) acting as rubber-elastic dampers are provided between the frame (2) and the lateral protective elements (S3, S4) in the central region between the front and rear axles (3, 4).

4. Kart according to claim 1, **characterized in that** the individual protective elements (S1, S2, S3, S4) and optionally connecting protective elements (S5, S6, S7, S8) are screwed together, wherein this screw connection each comprises a nut (16) radially secured in a recess (15) of an associated first protective element and a washer (18) radially secured in a recess (17) of a second protective element to be connected to the first, with a conical seat (19) for a conical seat screw (20) engaging in the nut (16).

5. Kart according to claim 1 or 4, **characterized in that** at least one shock-absorbing buffer (5) acting as a rubber-elastic damper is provided between the frame (2) and the front protective element (S1).

6. Kart according to one of claims 1 to 5, **characterized in that** at least one rubber-elastic bearing (6) is provided between the frame (2) and the front protective element (S1) or the connecting protective element (S5, S6).

7. Kart according to one of claims 1 to 6, **characterized in that** at least one shock-absorbing buffer (5) acting as a rubber-elastic damper is provided between the frame (4) and the rear protective element (S2).

8. Kart according to claim 7, **characterized in that** the rear protective element (S2) is mounted in longitudinal guides (14) associated with the frame (2) and is guided displaceably relative to the frame (2) against the spring force of the at least one buffer (5) in the direction of the longitudinal axis (13) of the frame.

9. Kart according to one of claims 1 to 8, **characterized in that** the buffers (5) have a mounting body (21) from which the buffer body (22) freely projects, which on its side opposite the mounting body (21) forms a stop (23) for a protective element (S1-S8), wherein the buffer body (5) consists of elastic material, in particular rubber or elastomeric foam.

## Patentansprüche

1. Kart (1), das einen Rahmen (2), eine Vorderachse (3) und eine Hinterachse (4) aufweist und das einen Aufprallschutz aufweist, der den Rahmen (2) umgibt und wenigstens ein vorderes und ein hinteres Schutzelement und wenigstens ein seitliches Schutzelement (S1, S2, S3, S4) an jeder Rahmenseite des Karts (1) aufweist, wobei stoßdämpfende, gummielastische Dämpfer zwischen dem Rahmen (2) und den Schutzelementen (S1, S2, S3, S4) vorgesehen sind, wobei die seitlichen Schutzelemente (S3, S4) jeweils derart an einem an dem Rahmen befestigten Schwenklager (7) montiert sind, dass sie um eine Rahmenvertikalachse (8) schwenkverstellbar sind, **dadurch gekennzeichnet, dass** die Schwenklager (7) näher an der Hinterachse (4) als an der Vorderachse (3) vorgesehen sind und jeweils einen am Rahmen befestigten Lagerblock (10) und einen relativ zu dem Lagerblock (10) schwenkverstellbaren Lagersockel (11) umfassen, wobei die seitlichen Schutzelemente (S3, S4) jeweils an dem zugeordneten Lagersockel (11) angreifen, wobei die seitlichen Schutzelemente (S3, S4) jeweils direkt oder indirekt über ein vorderes Verbindungs-Schutzelement (S5, S6) am vorderen Schutzelement (S1) und direkt oder indirekt über ein hinteres Verbindungselement (S7, S8) am hinteren Schutzelement (S2) angreifen und wobei gegebenenfalls das seitliche Schutzelement (S3, S4) jeweils über den Lagersockel (11) mit dem zugeordneten hinteren Verbindungs-Schutzelement (S7, S8) verbunden ist.

2. Kart nach Anspruch 1, **dadurch gekennzeichnet, dass** die seitlichen Schutzelemente (S3, S4) im mittigen Bereich zwischen der Vorder- und der Hinterachse (3, 4) in Richtung einer Rahmenquerachse (12) nach außen gebogen sind und im Nahbereich der Vorder- und der Hinterachse (3, 4) zu der Rahmenlängsachse (13) hingezogen sind.

3. Kart nach Anspruch 1 oder 2, **dadurch gekennzeichnet, dass** als gummielastische Dämpfer wirkende Puffer (5) zwischen dem Rahmen (2) und den seitlichen Schutzelementen (S3, S4) im mittigen Bereich zwischen der Vorder- und der Hinterachse (3, 4) vorgesehen sind.

4. Kart nach Anspruch 1, **dadurch gekennzeichnet, dass** die einzelnen Schutzelemente (S1, S2, S3, S4) und optional die Verbindungs-Schutzelemente (S5, S6, S7, S8) miteinander verschraubt sind, wobei diese Schraubverbindung jeweils eine in einer Ausnehmung (15) eines zugeordneten ersten Schutzelements radial gesicherte Mutter (16) und eine in einer Ausnehmung (17) eines mit dem ersten zu verbindenden zweiten Schutzelements radial gesicherte Scheibe (18) mit einem Kegelsitz (19) für eine in die Mutter (16) eingreifende Kegelsitzschraube (20) umfasst.

5. Kart nach Anspruch 1 oder 4, **dadurch gekennzeichnet, dass** wenigstens ein als gummielastischer Dämpfer wirkender stoßdämpfender Puffer (5) zwischen dem Rahmen (2) und dem vorderen Schutzelement (S1) vorgesehen ist.

6. Kart nach einem der Ansprüche 1 bis 5, **dadurch gekennzeichnet, dass** wenigstens ein gummielastisches Lager (6) zwischen dem Rahmen (2) und dem vorderen Schutzelement (S1) oder dem Verbindungs-Schutzelement (S5, S6) vorgesehen ist.

7. Kart nach einem der Ansprüche 1 bis 6, **dadurch gekennzeichnet, dass** wenigstens ein als gummielastischer Dämpfer wirkender stoßdämpfender Puffer (5) zwischen dem Rahmen (4) und dem hinteren Schutzelement (S2) vorgesehen ist.

8. Kart nach Anspruch 7, **dadurch gekennzeichnet, dass** das hintere Schutzelement (S2) in Längsführungen (14) montiert ist, die dem Rahmen (2) zugeordnet sind, und gegen die Federkraft des wenigstens einen Puffers (5) in Richtung der Längsachse (13) des Rahmens relativ zu dem Rahmen (2) verschiebbar geführt ist.

9. Kart nach einem der Ansprüche 1 bis 8, **dadurch gekennzeichnet, dass** die Puffer (5) einen Montagekörper (21) aufweisen, von dem der Pufferkörper (22) frei vorragt, welcher auf seiner dem Montagekörper (21) gegenüberliegenden Seite einen Anschlag (23) für ein Schutzelement (S1-S8) bildet, wobei der Pufferkörper (5) aus elastischem Material, insbesondere Gummi oder elastomerem Schaumstoff, besteht.

## Revendications

1. Kart (1) comportant un châssis (2), un essieu avant (3) et un essieu arrière (4), et possédant une protection contre les impacts qui entoure le châssis (2) et comporte au moins un élément de protection avant et un élément de protection arrière et au moins un élément de protection latéral (S1, S2, S3, S4) sur chaque côté de châssis du kart (1), dans lequel des amortisseurs élastiques en caoutchouc d'absorption de chocs sont situés entre le châssis (2) et les éléments de protection (S1, S2, S3, S4), dans lequel les éléments de protection latéraux (S3, S4) sont chacun montés sur un palier de pivotement (7) fixé au châssis de manière à pouvoir être réglés de manière pivotante autour d'un axe vertical de châssis (8), **caractérisé en ce que** les paliers de pivotement (7) se situent plus près de l'essieu arrière (4) que de l'essieu avant (3) et comprennent chacun un bloc de palier (10) fixé au châssis et un socle de palier (11) pouvant être réglé de manière pivotante par rapport audit bloc de palier (10), dans lequel les éléments de protection latéraux (S3, S4) entrent chacun en prise sur le socle de palier (11) associé, dans lequel les éléments de protection latéraux (S3, S4) entrent chacun en prise directement ou indirectement *via* un élément de protection de liaison avant (S5, S6) sur l'élément de protection avant (S1) et directement ou indirectement *via* un élément de liaison arrière (S7, S8) sur l'élément de protection arrière (S2) et si applicable, dans lequel l'élément de protection latéral (S3, S4) est chacun relié à l'élément de protection de liaison arrière (S7, S8) associé *via* le socle de palier (11).

2. Kart selon la revendication 1, **caractérisé en ce que** les éléments de protection latéraux (S3, S4) sont pliés vers l'extérieur dans la région centrale entre les essieux avant et arrière (3, 4) dans la direction d'un axe transversal de châssis (12) et sont tirés vers l'axe longitudinal de châssis (13) dans la région proche des essieux avant et arrière (3, 4).

3. Kart selon la revendication 1 ou 2, **caractérisé en ce que** des tampons (5) servant d'amortisseurs élastiques en caoutchouc sont situés entre le châssis (2) et les éléments de protection latéraux (S3, S4) dans la région centrale entre les essieux avant et arrière (3, 4).

4. Kart selon la revendication 1, **caractérisé en ce que** les éléments de protection individuels (S1, S2, S3, S4) et éventuellement des éléments de protection de liaison (S5, S6, S7, S8) sont vissés ensemble, dans lequel cette liaison à vis comprend chacune un écrou (16) radialement fixé dans un évidement (15) d'un premier élément de protection associé et une rondelle (18) radialement fixée dans un évidement (17) d'un second élément de protection à relier au premier, avec un siège conique (19) pour une vis de siège conique (20) entrant en prise dans l'écrou (16).

5. Kart selon la revendication 1 ou 4, **caractérisé en ce qu'**au moins un tampon d'absorption de chocs (5) servant d'amortisseur élastique en caoutchouc est situé entre le châssis (2) et l'élément de protection avant (S1).

6. Kart selon l'une des revendications 1 à 5, **caractérisé en ce qu'**au moins un palier élastique en caoutchouc (6) est situé entre le châssis (2) et l'élément de protection avant (S1) ou l'élément de protection de liaison (S5, S6).

7. Kart selon l'une des revendications 1 à 6, **caractérisé en ce qu'**au moins un tampon d'absorption de chocs (5) servant d'amortisseur élastique en caoutchouc est situé entre le châssis (4) et l'élément de protection arrière (S2).

8. Kart selon la revendication 7, **caractérisé en ce que** l'élément de protection arrière (S2) est monté dans des guides longitudinaux (14) associés au châssis (2) et est guidé de manière déplaçable par rapport au châssis (2) à l'encontre de la force de rappel de l'au moins un tampon (5) dans la direction de l'axe longitudinal (13) du châssis.

9. Kart selon l'une des revendications 1 à 8, **caractérisé en ce que** les tampons (5) comportent un corps de montage (21) depuis lequel le corps de tampon (22) se projette librement, lequel sur son côté opposé au corps de montage (21) forme une butée (23) pour un élément de protection (S1-S8), dans lequel le corps de tampon (5) est constitué d'une matière élastique, en particulier du caoutchouc ou de la mousse élastomère.
